(19) Europäisches Patentamt / European Patent Office / Office européen des brevets

(11) **EP 3 882 539 A1**

(12) **EUROPÄISCHE PATENTANMELDUNG**

(43) Veröffentlichungstag:
**22.09.2021 Patentblatt 2021/38**

(51) Int Cl.:
*F25B 30/02* *(2006.01)*      *F25B 49/02* *(2006.01)*

(21) Anmeldenummer: **21160107.5**

(22) Anmeldetag: **02.03.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **18.03.2020 DE 102020203443**

(71) Anmelder: **Robert Bosch GmbH**
**70442 Stuttgart (DE)**

(72) Erfinder:
• **Eklund, Gunnar**
**57392 Tranas (SE)**
• **Grudemo, Sebastian**
**57338 Tranas (SE)**
• **Tan, Yuting**
**57334 Tranas (SE)**

(54) **VERFAHREN ZUM BETRIEB EINER KOMPRESSIONSWÄRMEPUMPENVORRICHTUNG**

(57) Die Erfindung geht aus von einem Verfahren zum Betrieb einer Kompressionswärmepumpenvorrichtung, welche zumindest einen Wärmeträgerkreislauf (14) zu einem Umwälzen eines Wärmeträgers und welche zumindest eine Fördereinheit (16) zu einem Ansaugen eines fluiden Wärmereservoirs (18), insbesondere Umgebungsluft, umfasst.

Es wird vorgeschlagen, dass in zumindest einem Verfahrensschritt eine Sollförderleistungskenngröße (20) der Fördereinheit (16) in Abhängigkeit von einer Vorrichtungsleistungskenngröße (22) der Kompressionswärmepumpenvorrichtung ermittelt wird.

## Fig. 2

EP 3 882 539 A1

**Beschreibung**

Stand der Technik

Es ist bereits ein Verfahren zum Betrieb einer Kompressionswärmepumpen-vorrichtung vorgeschlagen worden, welche zumindest einen Wärmeträgerkreislauf zu einem Umwälzen eines Wärmeträgers und welche zumindest eine Fördereinheit zu einem Ansaugen eines fluiden Wärmereservoirs, insbesondere Umgebungsluft, umfasst.

Offenbarung der Erfindung

Die Erfindung geht aus von einem Verfahren zum Betrieb einer Kompressionswärmepumpenvorrichtung, welche zumindest einen Wärmeträgerkreislauf zu einem Umwälzen eines Wärmeträgers und welche zumindest eine Fördereinheit zu einem Ansaugen eines fluiden Wärmereservoirs, insbesondere Umgebungsluft, umfasst.

Es wird vorgeschlagen, dass in zumindest einem Verfahrensschritt des Verfahrens eine Sollförderleistungskenngröße der Fördereinheit in Abhängigkeit von einer Vorrichtungsleistungskenngröße der Kompressionswärmepumpen-vorrichtung ermittelt wird. Die Kompressionswärmepumpenvorrichtung kann insbesondere zu einem Heizen eines weiteren Wärmereservoirs, insbesondere eines Brauchfluids, wie Trinkwasser und/oder Betriebswasser, und/oder zu einem Kühlen des fluiden Wärmereservoirs vorgesehen sein. Insbesondere umfasst die Kompressionswärmepumpenvorrichtung in dem Wärmeträgerkreislauf fluidtechnisch eingebundene Kreislaufkomponenten. Vorzugsweise umfassen die Kreislaufkomponenten zumindest einen Kompressor zu einer Druckbeaufschlagung, insbesondere einem Verdichten, des Wärmeträgers, einen Kondensator zu einem Kondensieren des Wärmeträgers, eine Drossel zu einem Entspannen des Wärmeträgers und einen Verdampfer zu einem Verdampfen des Wärmeträgers. Die Fördereinheit umfasst zu einem Fördern des fluiden Wärmereservoirs beispielsweise einen Ventilator, einen Kompressor und/oder eine Pumpe, bevorzugt einen Axialventilator, einen Axialverdichter und/oder eine Axialpumpe. Besonders bevorzugt ist die Fördereinheit fluidtechnisch an dem Verdampfer angeschlossen, zu einem, insbesondere stofflosen, Wärmeaustausch zwischen dem Wärmereservoir und dem Wärmeträger. Alternativ ist die Fördereinheit oder zusätzlich ist eine weitere Fördereinheit der Kompressionswärmepumpenvorrichtung an dem Kondensator angeschlossen, zu einem, insbesondere stofflosen, Wärmeaustausch, zwischen dem weiteren Wärmereservoir und dem Wärmeträger. Vorzugsweise umfasst die Kompressionswärmepumpeneinheit zumindest eine Steuereinheit, welche in zumindest einem Verfahrensschritt des Verfahrens zumindest die Fördereinheit steuert oder regelt. Unter "vorgesehen" soll insbesondere speziell eingerichtet, speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Vorzugsweise wird als Sollförderleistungskenngröße eine Größe oder ein Kennwert ermittelt, der eine Leistung, Effizienz und/oder Effektivität der Fördereinheit beschreibt oder charakterisiert. Bevorzugt ist die Sollförderleistungskenngröße als Sollwert einer aufzunehmenden elektrischen Leistung, einer zu erbringenden mechanischen Förderleistung, eines Wirkungsgrads oder einer anderen, dem Fachmann als sinnvoll erscheinenden Größe oder eines Kennwerts ausgebildet.

Die Vorrichtungsleistungskenngröße beschreibt oder charakterisiert insbesondere eine Leistung, Effizienz und/oder Effektivität des Wärmeträgerkreislaufs. Bevorzugt ist die Vorrichtungsleistungskenngröße eine Funktion, mehrere Einzelkenngrößen und/oder Einzelkennwerte, welche unterschiedlichen Kreislaufkomponenten des Wärmeträgerkreislaufs zugeordnet sind. Die Vorrichtungsleistungskenngröße kann beispielsweise von einer Heizleistung des Kondensators, einer Kühlleistung des Verdampfers, einer erbrachten mechanischen Leistung des Kompressors, einer aufgenommenen elektrischen Leistung des Kompressors, einem Wirkungsgrad der Kompressionswärmepumpenvorrichtung, einer Leistungszahl (engl.: coefficent of performance, COP) der Kompressionswärmepumpenvorrichtung und/oder einer anderen, dem Fachmann als sinnvoll erscheinenden Größe und/oder Kennzahl abhängen.

Vorzugsweise ermittelt die Steuereinheit in zumindest einem Verfahrensschritt des Verfahrens die Vorrichtungsleistungskenngröße. Vorzugsweise erfasst eine Sensoreinheit der Kompressionswärmepumpenvorrichtung eine Temperatur des Wärmereservoirs, des weiteren Wärmereservoirs und/oder des Wärmeträgers, insbesondere eine Rücklauftemperatur des Wärmeträgers zu dem Kompressor, eine Verdampfertemperatur und/oder eine Kondensatortemperatur, zu einer Ermittlung der Vorrichtungsleistungskenngröße. Beispielsweise erfasst die Sensoreinheit eine elektrische Leistungsaufnahme und/oder eine Drehzahl des Kompressors. Alternativ oder zusätzlich verwendet die Steuereinheit in einer Speichereinheit der Steuereinheit hinterlegte Kennkurven, Tabellenwerke oder dergleichen, um die Vorrichtungsleistungskenngröße zu ermitteln.

Vorzugsweise berechnet die Steuereinheit in zumindest einem Verfahrensschritt des Verfahrens aus der Vorrichtungsleistungskenngröße die Sollförderleistungskenngröße. Vorzugsweise stellt die Steuereinheit einen Betriebsparameter, insbesondere eine Drehzahl, der Fördereinheit ein, um die Sollförderleistungskenngröße zu erreichen. Optional regelt die Steuereinheit den Betriebsparameter, insbesondere die Drehzahl, der Fördereinheit, bis die Sollförderleistungskenngröße, insbesondere zumindest bis auf einen Toleranzwert, erreicht ist.

Durch die erfindungsgemäße Ausgestaltung kann ein Betriebszustand der Fördereinheit vorteilhaft auf einen Betriebszustand des Wärmeträgerkreislaufs abgestimmt werden. Insbesondere kann ein Risiko einer ungenügenden und/oder einer unnötig hohen Förderrate der Fördereinheit vorteilhaft gering gehalten werden. Insbesondere kann die Kompressionswärmepumpenvorrichtung vorteilhaft effizient betrieben werden. Insbesondere kann eine Geräuschentwicklung auf Grund einer unnötig hohen Förderrate vorteilhaft niedrig gehalten werden. Darüber hinaus kann eine Testphase bei einer Herstellung der Kompressionswärmepumpenvorrichtung zu einer Abstimmung des Betriebszustands der Fördereinheit auf den Betriebszustand des Wärmeträgerkreislaufs vorteilhaft kurz gehalten werden.

Weiter wird vorgeschlagen, dass die Vorrichtungsleistungskenngröße zumindest abhängig von einem Effizienzparameter der Kompressionswärmepumpen-vorrichtung ist. Der Effizienzparameter beschreibt oder charakterisiert insbesondere ein Verhältnis von aufgenommener, insbesondere elektrischer, Leistung der Kompressionswärmepumpenvorrichtung und erbrachter Heizleistung oder erbrachter Kühlleistung. Vorzugsweise korreliert die Vorrichtungsleistungskenngröße positiv mit dem Effizienzparameter. Besonders bevorzugt ist die Vorrichtungsleistungskenngröße proportional zu dem Effizienzparameter. Bevorzugt wird als Effizienzparameter ein von aktuellen Betriebsbedingungen abhängiger Wert verwendet. Vorzugsweise ist der Effizienzparameter gleich der Leistungszahl (engl.: coefficient of performance, COP) der Kompressionswärmepumpenvorrichtung oder einer saisonalen Leistungszahl (engl.: seasonal coefficient of performance, SCOP) der Kompressionswärmepumpenvorrichtung. Vorzugsweise ist der Effizienzparameter abhängig von einer elektrischen Leistungsaufnahme der gesamten Kompressionswärmepumpenvorrichtung, insbesondere einschließlich der Fördereinheit. Durch die erfindungsgemäße Ausgestaltung ist die mittels der Vorrichtungsleistungskenngröße ermittelte Sollförderleistungskenngröße, insbesondere zusätzlich zu einer Betriebszustandsabhängigkeit, vorteilhaft effizienzabhängig.

Weiter wird vorgeschlagen, dass die Vorrichtungsleistungskenngröße zumindest abhängig von einem Arbeitspunktparameter der Kompressionswärmepumpenvorrichtung ist. Der Arbeitspunktparameter beschreibt oder charakterisiert insbesondere eine aktuelle Effektivität eines Heizens oder Kühlens der Kompressionswärmepumpenvorrichtung. Insbesondere beschreiben oder charakterisieren mehrere Arbeitspunktparameter zusammen einen Betriebszustand des Wärmekreislaufs. Die Steuereinheit verwendet als Arbeitspunktparameter insbesondere die Heizleistung des Kondensators, die Kühlleistung des Verdampfers und/oder eine Kompressorleistung des Kompressors. Vorzugsweise ist die Vorrichtungsleistungskenngröße abhängig von zumindest zwei Arbeitspunktparametern. Beispielsweise ist die Vorrichtungsleistungskenngröße abhängig von der Kühlleistung und von der Heizleistung. Beispielsweise ist die Vorrichtungsleistungskenngröße abhängig von der Kühlleistung und einer Kompressorleistung des Kompressors. Beispielsweise ist die Vorrichtungsleistungskenngröße abhängig von der Heizleistung und der Kompressorleistung. Die Kompressorleistung kann beispielsweise, insbesondere abhängig von der verwendeten Messmethode, als erbrachte mechanische Leistung des Kompressors, und/oder als aufgenommene elektrische Leistung des Kompressors ausgedrückt werden. Vorzugsweise korreliert die Vorrichtungsleistungskenngröße positiv mit dem/n Arbeitspunktparameter/n. Besonders bevorzugt ist die Vorrichtungsleistungskenngröße unterproportional zu dem/n Arbeitspunktparameter/n. Durch die erfindungsgemäße Ausgestaltung ist die mittels der Vorrichtungsleistungskenngröße ermittelte Sollförderleistungskenngröße, insbesondere zusätzlich zu einer Effizienzabhängigkeit, vorteilhaft betriebszustandsabhängig.

Weiterhin wird vorgeschlagen, dass in einem Kalibrierungsschritt eine Relation zwischen der Sollförderleistungskenngröße und der Vorrichtungsleistungskenngröße unter Maximierung der Vorrichtungsleistungskenngröße ermittelt wird. Vorzugsweise ermittelt die Steuereinheit in dem Kalibrierungsschritt nach zumindest einer optimalen Förderleistung, insbesondere zumindest einer optimalen Drehzahl, der Fördereinheit. Unter "optimal" soll insbesondere derjenigen Wert der Förderleistung, insbesondere der Drehzahl, verstanden werden, bei welchem der Effizienzparameter bei einem bestimmten Betriebszustand des Wärmeträgerkreislaufs einen Maximalwert annimmt. Insbesondere können unterschiedliche Betriebszustände des Wärmeträgerkreislaufs unterschiedliche optimale Förderleistungen, insbesondere optimale Drehzahlen, der Fördereinheit aufweisen. Insbesondere variiert die Steuereinheit in dem Kalibrierungsschritt für zumindest einen Betriebszustand des Wärmeträgerkreislaufs die Förderleistung, insbesondere die Drehzahl, der Fördereinheit, um den Effizienzparameter zu maximieren und insbesondere die optimale Förderleistung, insbesondere die optimale Drehzahl, zu ermitteln. Vorzugsweise ermittelt die Steuereinheit für verschiedene Betriebszustände des Wärmeträgerkreislaufs die optimale Förderleistung, insbesondere die optimale Drehzahl. Vorzugsweise erstellt die Steuereinheit in dem Kalibrierungsschritt eine Regressionsfunktion für die den Effizienzparameter umfassende Vorrichtungsleistungskenngröße in Abhängigkeit von der optimalen Förderleistung. Vorzugsweise wird die Regressionsfunktion in dem Kalibrierungsschritt als Rechenvorschrift für die Steuereinheit in dem Speicher der Steuereinheit hinterlegt, insbesondere zu einer Ermittlung und Verwendung als Sollförderkenngröße der optimalen Förderleistung in Abhängigkeit von einem aktuellen Betriebszustand während eines regulären Betriebs der Kompressionswärmepumpenvorrichtung. Insbesondere wird die Regressionsfunktion nach einem an sich bekannten Verfahren ermittelt, beispielsweise einem Verfahren basierend auf der Methode der kleinsten Quadrate, basierend auf der Maximum-Likelihood-Methode, basierend auf einer Gaußprozess-Regression oder dergleichen. Durch die erfindungsgemäße Ausgestaltung kann jedem Wert der Vorrichtungsleistungskenngröße eine vorteilhaft spezifische Sollförderleistungskenngröße zugeordnet werden. Insbesondere kann in einer Testphase bei einer Herstellung der Kompressionswärmepumpenvorrichtung eine optimale Förderleistung bei Kenntnis der Vorrichtungsleistungskenngröße vorteilhaft genau abgeschätzt werden.

Ferner wird vorgeschlagen, dass in zumindest einem Verfahrensschritt des Verfahrens als Sollförderleistungskenngröße ein Wert gewählt wird, der mit der Vorrichtungsleistungskenngröße, insbesondere positiv, korreliert. Besonders bevorzugt verwendet die Steuereinheit für die Regressionsfunktion der Vorrichtungsleistungskenngröße ein Polynom erster Ordnung in der optimalen Förderleistung, welches insbesondere ausschließlich einen linearen Term umfasst. Insbesondere ermittelt die Steuereinheit in dem Kalibrierungsschritt einen Proportionalitätsfaktor zwischen der Sollförderleistungskenngröße, insbesondere die optimale Förderleistung, und der Vorrichtungsleistungskenngröße. Optional mittelt die Steuereinheit Verhältnisse aus unterschiedlichen Vorrichtungsleistungskenngrößen und zugehörig ermittelten optimalen Förderleistungen, um den Proportionalitätsfaktor zu ermitteln. Alternativ verwendet die Steuereinheit ein Polynom zumindest zweiter Ordnung in der optimalen Förderleistung als Regressionsfunktion für die Vorrichtungsleistungskenngröße. Vorzugsweise ist der Proportionalitätsfaktor abhängig von einer konkreten Auslegung der Kompressionswärmepumpenvorrichtung. Vorzugsweise ist der Proportionalitätsfaktor zumindest im Wesentlichen unabhängig von einem Betriebszustand des Wärmeträgerkreislaufs. Darunter, dass ein Wert "im Wesentlichen unabhängig" von einer Größe ist soll insbesondere verstanden werden, dass der Wert bei einer Variation der Größe innerhalb eines für einen Betrieb der Kompressionswärmevorrichtung relevanten Wertebereichs um weniger als 15 %, bevorzugt um weniger als 10 %, besonders bevorzugt um weniger als 5 % gegenüber einem Mittelwert des Werts schwankt. Durch die erfindungsgemäße Ausgestaltung der Vorrichtungsleistungskenngröße kann eine vorteilhaft einfache, insbesondere vorteilhaft schnell auszuwertende und vorteilhaft wenig Speicherplatz benötigende, Rechenvorschrift für die Sollförderleistungskenngröße bereitgestellt werden.

Darüber hinaus wird vorgeschlagen, dass in zumindest einem Verfahrensschritt des Verfahrens eine Solldrehzahl aus der Sollförderleistungskenngröße ermittelt wird. Insbesondere ist in der Speichereinheit der Steuereinheit eine drehzahlabhängige Kennlinie der Fördereinheit hinterlegt, welche insbesondere eine Förderhöhe der Fördereinheit mit einer Fördermenge der Fördereinheit verknüpft. Insbesondere ist jedem Schnittpunkt der Kennlinie mit einer Systemkennkurve, welche insbesondere einen Strömungswiderstand für das fluide Wärmereservoir beschreibt, ein Wert der Förderleistung zuordnebar. Die Systemkennkurve kann beispielsweise in der Steuereinheit hinterlegt sein oder bevorzugt mittels Erfassung von Druck und Volumenstrom des fluiden Wärmereservoirs, mittels Erfassung der Drehzahl und der elektrischen Leistungsaufnahme der Fördereinheit und/oder einer anderen Kombination der genannten Größen ermittelt werden. Vorzugsweise ermittelt die Steuereinheit die Systemkennkurve, insbesondere den Strömungswiderstand, während des regulären Betriebs der Kompressionswärmepumpe. Vorzugsweise ordnet die Steuereinheit der vorgegebenen Sollförderleistungskenngröße anhand der Kennlinie der Fördereinheit, und insbesondere dem Strömungswiderstand für das fluide Wärmereservoir, die Solldrehzahl zu. Insbesondere steuert oder regelt die Steuereinheit die Drehzahl der Fördereinheit abhängig von der Solldrehzahl. Alternativ verwendet die Steuereinheit die Drehzahl als Stellgröße zu einer Steuerung oder Regelung der aufgenommenen elektrischen Leistung in Abhängig von der Sollförderleistungskenngröße, insbesondere ohne direkte Erfassung der Drehzahl. Durch die erfindungsgemäße Ausgestaltung kann die Fördereinheit vorteilhaft effizienzoptimiert betrieben werden.

Des Weiteren wird vorgeschlagen, dass in zumindest einem Verfahrensschritt des Verfahrens die Sollförderleistungskenngröße durch zumindest eine auslegungsunabhängige Nebenbedingung eingeschränkt wird. Unter einer "auslegungsunabhängigen" Nebenbedingung soll insbesondere eine Nebenbedingung verstanden werden, welche sich nicht durch eine Auslegung der Kompressionswärmepumpenvorrichtung begründet. Nebenbedingungen, die abhängig von der Auslegung sind, umfassen insbesondere durch die Auslegung vorgegebene Extremwerte, wie etwa eine Nennleistung, eine Spitzenleistung, eine maximal erreichbare Drehzahl, einen maximal zulässigen Druck oder dergleichen. Die auslegungsunabhängige Nebenbedingung ist beispielsweise begründet durch Benutzerkomfort, Umweltschutz, wirtschaftliche Interessen, gesetzliche Vorgaben oder dergleichen. Beispiele für die auslegungsunabhängige Nebenbedingung umfassen insbesondere einen maximal zulässigen, insbesondere tageszeitabhängigen, Geräuschpegel, einen maximal zulässigen Energieverbrauch und/oder eine maximale Wärmeabgabe an die Umgebung, insbesondere bei Nutzung der Kompressionswärmepumpenvorrichtung zu einem Kühlen des fluiden Wärmereservoirs. Vorzugsweise beschränkt die Steuereinheit die ermittelte Sollförderleistungskenngröße abhängig von der auslegungsunabhängigen Nebenbedingung. Alternativ berücksichtig die Steuereinheit die auslegungsunabhängige Nebenbedingung bei einer Ermittlung der Sollförderleistungskenngröße. Insbesondere ermittelt die Steuereinheit eine unter der auslegungsunabhängigen Nebenbedingung eingeschränkt optimale Förderleistung, bei welcher der Effizienzparameter ein zumindest lokales Maximum aufweist. Im Besonderen kann die unter der auslegungsunabhängigen Nebenbedingung eingeschränkt optimale Förderleistung gleich der optimalen Förderleistung sein. Durch die erfindungsgemäße Ausgestaltung kann das Verfahren vorteilhaft flexibel ausgestaltet werden. Insbesondere kann auch ein eingeschränkter Betrieb vorteilhaft effizient durchgeführt werden.

Ferner wird eine Kompressionswärmepumpenvorrichtung mit einer, insbesondere der bereits genannten, Steuereinheit zu einer Durchführung eines erfindungsgemäßen Verfahrens vorgeschlagen. Unter einer "Steuereinheit" soll insbesondere eine Einheit mit zumindest einer Steuerelektronik verstanden werden. Unter einer "Steuerelektronik" soll insbesondere eine Einheit mit einer Prozessoreinheit und mit einer, insbesondere der bereits genannten, Speichereinheit sowie mit einem in der Speichereinheit gespeicherten Betriebsprogramm verstanden werden. Insbesondere umfasst die Kompressionswärmepumpenvorrichtung den Wärmeträgerkreislauf. Die Kompressionswärmepumpenvorrichtung umfasst insbesondere einen Kompressor zu einem Umwälzen und insbesondere einer Druckbeaufschlagung, insbesondere Verdichten, des Wärmeträgers. Die Kompressionswärmepumpenvorrichtung umfasst vorzugsweise zumindest einen Kondensator zu einem Kondensieren des Wärmeträgers und insbesondere zu einer Übertragung von Kondensationswärme auf das weitere Wärmereservoir. Das weitere Wärmereservoir kann beispielsweise als Heizkörperkreislauf oder als Brauchfluid, insbesondere Betriebswasser und/oder Trinkwasser, ausgebildet sein. Die Kompressionswärmepumpenvorrichtung umfasst insbesondere zumindest eine Drossel zu einem Entspannen des Wärmeträgers. Die Kompressionswärmepumpenvorrichtung umfasst vorzugsweise einen Verdampfer, insbesondere zu einem Verdampfen des Wärmeträgers. Insbesondere ist der Verdampfer dazu vorgesehen, eine notwendige Verdampfungswärme dem von der Fördereinheit geförderten fluiden Wärmereservoir, insbesondere ohne Stoffaustausch, zu entnehmen. Insbesondere ist die Fördereinheit an dem Verdampfer angeschlossen. Die Fördereinheit ist vorzugsweise dazu vorgesehen, das fluide Wärmereservoir, insbesondere Umgebungsluft und/oder Wasser, dem Verdampfer zuzuführen. Insbesondere ist die Steuereinheit dazu vorgesehen, zumindest die Fördereinheit zu steuern oder zu regeln. Durch die erfindungsgemäße Ausgestaltung kann eine vorteilhaft effiziente, geräuscharme und energiesparende Kompressionswärmepumpenvorrichtung bereitgestellt werden.

Das erfindungsgemäße Verfahren und/oder die erfindungsgemäße Kompressionswärmepumpenvorrichtung sollen/soll hierbei nicht auf die oben beschriebene Anwendung und Ausführungsform beschränkt sein. Insbesondere kann das erfindungsgemäße Verfahren und/oder die erfindungsgemäße Kompressionswärmepumpenvorrichtung zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 eine schematische Darstellung einer erfindungsgemäßen Kompressionswärmepumpenvorrichtung und

Fig. 2 eine schematische Darstellung eines erfindungsgemäßen Verfahrens.

Beschreibung des Ausführungsbeispiels

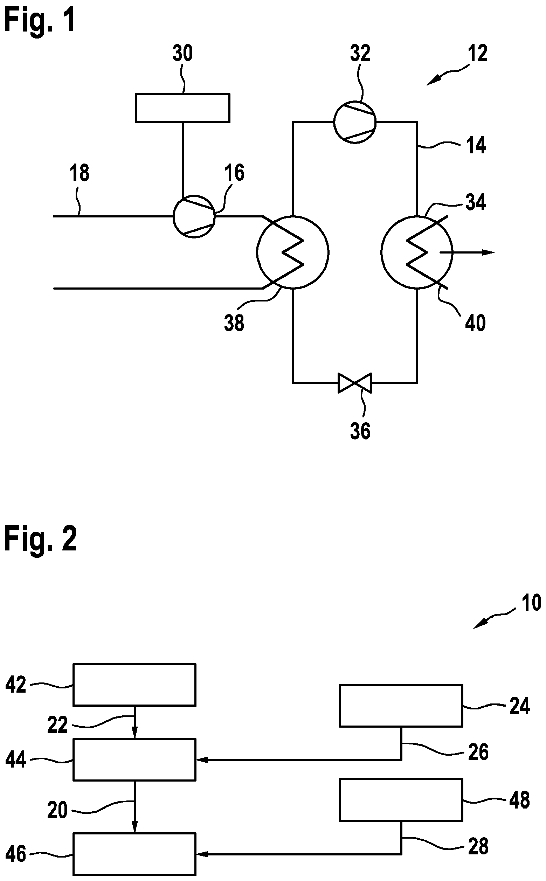

Figur 1 zeigt eine Kompressionswärmepumpenvorrichtung 12. Die Kompressionswärmepumpenvorrichtung 12 umfasst zumindest einen Wärmeträgerkreislauf 14. Der Wärmeträgerkreislauf 14 ist zu einem Umwälzen eines Wärmeträgers vorgesehen. Die Kompressionswärmepumpenvorrichtung 12 umfasst, insbesondere in dem Wärmeträgerkreislauf 14, zumindest einen Verdampfer 38. Der Verdampfer 38 ist vorzugsweise an einem fluiden Wärmereservoir 18 angeschlossen, insbesondere zu einem Wärmeaustausch zwischen dem Wärmeträgerkreislauf 14 und dem fluiden Wärmereservoir 18. Vorzugsweise umfasst die Kompressionswärmepumpenvorrichtung 12, insbesondere in dem Wärmeträgerkreislauf 14, zumindest einen Kompressor 32. Bevorzugt umfasst die Kompressionswärmepumpenvorrichtung 12, insbesondere in dem Wärmeträgerkreislauf 14, zumindest eine Drossel 36. Vorzugsweise umfasst die Kompressionswärmepumpenvorrichtung 12, insbesondere in dem Wärmeträgerkreislauf 14, zumindest einen Kondensator 34. Insbesondere ist der Kondensator 34 an einem weiteren Wärmereservoir 40 angeschlossen, insbesondere zu einem Wärmeaustausch zwischen dem Wärmeträgerkreislauf 14 und dem weiteren Wärmereservoir 40. Die Kompressionswärmepumpenvorrichtung 12 umfasst zumindest eine Fördereinheit 16. Die Fördereinheit 16 ist zu einem Ansaugen des fluiden Wärmereservoirs 18 vorgesehen. Beispielhaft ist das fluide Wärmereservoir 18 als Umgebungsluft ausgebildet.

Die Kompressionswärmepumpenvorrichtung 12 umfasst eine Steuereinheit 30. Die Steuereinheit 30 ist zu einer Durchführung eines Verfahrens 10 vorgesehen, welches beispielhaft in Figur 2 dargestellt ist. Insbesondere ist die Steuereinheit 30 zu einer Steuerung der Fördereinheit 16 vorgesehen. Vorzugsweise ist die Steuereinheit 30 zusätzlich als Wärmepumpensteuereinheit ausgebildet, insbesondere zu einer Steuerung des Kompressors 32. Vorzugsweise umfasst die Kompressionswärmepumpenvorrichtung 12 zumindest eine Sensoreinheit. Die Sensoreinheit ist insbesondere dazu vorgesehen, eine Drehzahl der Fördereinheit 16 und/oder eine Förderleistung, insbesondere einer aufgenommenen elektrischen Leistung oder einen Förderhöhe und eine Fördermenge, der Fördereinheit 16 zu erfassen. Vorzugsweise ist die Sensoreinheit dazu vorgesehen, einen Betriebszustand des Wärmeträgerkreislaufs 14, insbesondere zumindest eine Betriebstemperatur des Wärmeträgers, eine Drehzahl des Kompressors 32 und/oder eine Kompressorleistung, insbesondere eine aufgenommene elektrische Leistung oder eine Förderhöhe sowie eine Fördermenge, des Kompressors 32 zu erfassen.

Figur 2 zeigt das Verfahren 10 zu einem Betrieb der Kompressionswärmepumpenvorrichtung 12. Das Verfahren 10 umfasst einen Kalibrierungsschritt 24. Das Verfahren 10 umfasst insbesondere einen Betriebsermittlungsschritt 42, insbesondere zu einer Ermittlung eines Betriebszustands des Wärmeträgerkreislaufs 14 und einer damit verbundenen Vorrichtungsleistungskenngröße 22. Vorzugsweise umfasst das Verfahren 10 einen Förderermittlungsschritt 44, insbesondere zu einer Ermittlung einer Sollförderleistungskenngröße 20 der Fördereinheit 16. Vorzugsweise umfasst das Verfahren 10 einen Einstellschritt 46 zu einer Einstellung der Fördereinheit 16. Optional umfasst das Verfahren 10 einen Anpassungsschritt 48 zu einer Anpassung der Sollförderleistungskenngröße 20.

Die Vorrichtungsleistungskenngröße 22 ist zumindest abhängig von einem Effizienzparameter der Kompressionswärmepumpenvorrichtung 12. Insbesondere ist der Effizienzparameter als Leistungszahl (COP) ausgebildet. Die Vorrichtungsleistungskenngröße 22 ist zumindest abhängig von einem Arbeitspunktparameter der Kompressionswärmepumpenvorrichtung 12. Beispielsweise ist die Vorrichtungsleistungskenngröße 22 abhängig von einer Kühlleistung des Verdampfers 38 und von der Kompressorleistung des Kompressors 32. Insbesondere wertet die Steuereinheit 30 den Ausdruck:

$$ P_{VLK} = \left( Q_C * P_{comp} \right)^{1/3} * n_{comp} * \eta $$

als Vorrichtungsleistungskenngröße 22 aus, wobei $Q_C$ die Kühlleistung des Verdampfers 38, $P_{comp}$ die Kompressorleistung, $n_{comp}$ die Drehzahl des Kompressors 32 und $\eta$ der Effizienzparameter ist.

In dem Kalibrierungsschritt 24 wird eine Relation 26 zwischen der Sollförderleistungskenngröße 20 und der Vorrichtungsleistungskenngröße 22 unter Maximierung der Vorrichtungsleistungskenngröße 22 ermittelt. Insbesondere ermittelt die Steuereinheit 30 in dem Kalibrierungsschritt 24 eine optimale Förderleistung der Fördereinheit 16, bei welchem der Effizienzparameter ein Maximum annimmt. Insbesondere ermittelt die Steuereinheit 30 in dem Kalibrierungsschritt 24 einen Proportionalitätsfaktor zwischen der optimalen Förderleistung und der Vorrichtungsleistungskenngröße 22. Insbesondere hinterlegt die Steuereinheit 30 den Proportionalitätsfaktor als Relation 26 zwischen der Sollförderleistungskenngröße 20 und der Vorrichtungsleistungskenngröße 22 in einer Speichereinheit der Steuereinheit 30. Optional wird die Relation 26 zwischen der Sollförderleistungskenngröße 20 und der Vorrichtungsleistungskenngröße 22 von einem Hersteller an einer insbesondere baugleichen Kompressionswärmepumpenvorrichtung ermittelt und in der Speichereinheit hinterlegt.

In dem Betriebsermittlungsschritt 42 ermittelt die Steuereinheit 30 insbesondere den Betriebszustand des Wärmeträgerkreislaufs 14. Die Steuereinheit 30 stellt während eines regulären Betriebs der Kompressionswärmepumpenvorrichtung 12 den Betriebszustand des Wärmeträgerkreislaufs 14 insbesondere abhängig von einem Heizbedarf des weiteren Wärmereservoirs 40 ein, der automatisch ermittelt oder von einem Benutzer vorgegeben wird. Die Steuereinheit 30 ermittelt den Betriebszustand insbesondere mittels der Sensoreinheit und/oder durch Auslesen von Steuerparametern der Steuereinheit 30 zur Einstellung des Betriebszustands. Insbesondere ermittelt die Steuereinheit 30 in dem Betriebsermittlungsschritt 42 die Vorrichtungsleistungskenngröße 22.

In dem Förderermittlungsschritt 44 wird die Sollförderleistungskenngröße 20 der Fördereinheit 16 in Abhängigkeit von der Vorrichtungsleistungskenngröße 22 der Kompressionswärmepumpenvorrichtung 12 ermittelt. In dem Förderermittlungsschritt 44 wird als Sollförderleistungskenngröße 20 ein Wert gewählt, der mit der Vorrichtungsleistungskenngröße 22 korreliert. Vorzugsweise wertet die Steuereinheit 30 in dem Förderermittlungsschritt 44 die Relation 26 zwischen der Sollförderleistungskenngröße 20 und der Vorrichtungsleistungskenngröße 22 mit der ermittelten Vorrichtungsleistungskenngröße 22 aus und verwendet das Ergebnis als Sollförderleistungskenngröße 20. Insbesondere beaufschlagt die Steuereinheit 30 in dem Förderermittlungsschritt 44 die Vorrichtungsleistungskenngröße 22 mit dem Proportionalitätsfaktor und verwendet das Ergebnis als Sollförderleistungskenngröße 20.

In dem Einstellschritt 46 wird eine Solldrehzahl aus der Sollförderleistungskenngröße 20 ermittelt. Insbesondere ermittelt die Steuereinheit 30 in dem Einstellschritt 46 die Solldrehzahl. Insbesondere steuert oder regelt die Steuereinheit 30 in dem Einstellschritt 46 die Fördereinheit 16 in Abhängigkeit von der Solldrehzahl, insbesondere von der Sollförderleistungskenngröße 20. In dem Anpassungsschritt 48 wertet die Steuereinheit 30 zumindest eine auslegungsunabhängige Nebenbedingung 28 aus. Die Sollförderleistungskenngröße 20 und/oder die Solldrehzahl wird durch die zumindest eine auslegungsunabhängige Nebenbedingung 28 eingeschränkt. Beispielsweise wird die Solldrehzahl abhängig von einer maximal zulässigen Geräuschentwicklung eingeschränkt.

**Patentansprüche**

1.  Verfahren zum Betrieb einer Kompressionswärmepumpenvorrichtung, welche zumindest einen Wärmeträgerkreislauf (14) zu einem Umwälzen eines Wärmeträgers und welche zumindest eine Fördereinheit (16) zu einem Ansaugen eines fluiden Wärmereservoirs (18), insbesondere Umgebungsluft, umfasst, **dadurch gekennzeichnet, dass** in zumindest einem Verfahrensschritt eine Sollförderleistungskenngröße (20) der Fördereinheit (16) in Abhängigkeit von einer Vorrichtungsleistungskenngröße (22) der Kompressionswärmepumpenvorrichtung ermittelt wird.

2.  Verfahren nach Anspruch 1, **dadurch gekennzeichnet, dass** die Vorrichtungsleistungskenngröße (22) zumindest abhängig von einem Effizienzparameter der Kompressionswärmepumpenvorrichtung ist.

3.  Verfahren nach Anspruch 1 oder 2, **dadurch gekennzeichnet, dass** die Vorrichtungsleistungskenngröße (22) zumindest abhängig von einem Arbeitspunktparameter der Kompressionswärmepumpenvorrichtung ist.

4.  Verfahren nach einem der vorhergehenden Ansprüche, **dadurch gekennzeichnet, dass** in einem Kalibrierungsschritt (24) eine Relation (26) zwischen der Sollförderleistungskenngröße (20) und der Vorrichtungsleistungskenngröße (22) unter Maximierung der Vorrichtungsleistungskenngröße (22) ermittelt wird.

5.  Verfahren nach einem der vorhergehenden Ansprüche, **dadurch gekennzeichnet, dass** in zumindest einem Verfahrensschritt als Sollförderleistungskenngröße (20) ein Wert gewählt wird, der mit der Vorrichtungsleistungskenngröße (22) korreliert.

6.  Verfahren nach einem der vorhergehenden Ansprüche, **dadurch gekennzeichnet, dass** in zumindest einem Verfahrensschritt eine Solldrehzahl aus der Sollförderleistungskenngröße (20) ermittelt wird.

7.  Verfahren nach einem der vorhergehenden Ansprüche, **dadurch gekennzeichnet, dass** in zumindest einem Verfahrensschritt die Sollförderleistungskenngröße (20) durch zumindest eine auslegungsunabhängige Nebenbedingung (28) eingeschränkt wird.

8.  Kompressionswärmepumpenvorrichtung mit einer Steuereinheit (30) zu einer Durchführung eines Verfahrens nach einem der vorhergehenden Ansprüche.

## Fig. 1

## Fig. 2

Europäisches
Patentamt

European
Patent Office

Office européen
des brevets

**EUROPÄISCHER RECHERCHENBERICHT**

Nummer der Anmeldung

EP 21 16 0107

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2004 042887 B3 (AUDI AG [DE]) 19. Januar 2006 (2006-01-19) * Absätze [0030], [0032], [0038]; Abbildungen 1-4 * ----- | 1-8 | INV. F25B30/02 F25B49/02 |
| A | DE 197 43 828 A1 (BEHR GMBH & CO [DE]) 8. April 1999 (1999-04-08) * Spalte 3, Zeile 12 - Spalte 6, Zeile 56; Abbildungen 1-3 * ----- | 1-8 | |
| A | DE 101 33 208 C1 (VISTEON GLOBAL TECH INC [US]) 2. Oktober 2002 (2002-10-02) * Absätze [0036], [0045], [0046]; Abbildungen 1,2,4 * ----- | 1-8 | |
| A | EP 1 524 137 A2 (BEHR GMBH & CO KG [DE]) 20. April 2005 (2005-04-20) * Absatz [0018]; Abbildung 1 * ----- | 1-8 | |

RECHERCHIERTE
SACHGEBIETE (IPC)

F25B

Der vorliegende Recherchenbericht wurde für alle Patentansprüche erstellt

| Recherchenort | Abschlußdatum der Recherche | Prüfer |
|---|---|---|
| München | 2. August 2021 | Gasper, Ralf |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**EP 3 882 539 A1**

**ANHANG ZUM EUROPÄISCHEN RECHERCHENBERICHT
ÜBER DIE EUROPÄISCHE PATENTANMELDUNG NR.**

EP 21 16 0107

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-08-2021

| Im Recherchenbericht angeführtes Patentdokument | Datum der Veröffentlichung | Mitglied(er) der Patentfamilie | Datum der Veröffentlichung |
|---|---|---|---|
| DE 102004042887 B3 | 19-01-2006 | KEINE | |
| DE 19743828 A1 | 08-04-1999 | KEINE | |
| DE 10133208 C1 | 02-10-2002 | KEINE | |
| EP 1524137 A2 | 20-04-2005 | AT 451263 T<br>DE 10348702 A1<br>EP 1524137 A2 | 15-12-2009<br>12-05-2005<br>20-04-2005 |

EPO FORM P0461

Für nähere Einzelheiten zu diesem Anhang : siehe Amtsblatt des Europäischen Patentamts, Nr.12/82